# EUROPEAN PATENT APPLICATION

(11) **EP 3 843 301 A1**
(43) Date of publication of application: **30.06.2021**
(21) Application number: 18934326.2
(22) Date of filing: 21.09.2018
(51) Int. Cl.: H04L 1/00

(54) **WIRELESS COMMUNICATION METHOD, TRANSMITTING NODE AND RECEIVING NODE**

(71) Applicant: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: Novagraaf Technologies
(86) International application number: PCT/CN2018/107127
(87) International publication number: WO 2020/056777

(57) **Abstract**

Provided are a wireless communication method, a transmitting node and a receiving node capable of increasing resource utilization. The method comprises: a transmitting node transmitting, to a receiving node, and in a first subband, a first reference signal and a second reference signal through the same antenna port, wherein the receiving node performs channel estimation based on the first reference signal and the second reference signal.

## Description

### TECHNICAL FIELD

Embodiments of the present disclosure generally relate to communication technologies, and more particularly, to wireless communication methods, sending nodes, and receiving nodes.

### BACKGROUND

In the 5G New Radio (NR) system, a terminal device needs to access a cell through an initial active BandWidth Part (BWP). Specifically, during the cell access procedure, the terminal device sequentially demodulates a Physical Broadcast Channel (PBCH), a Physical Downlink Control Channel (PDCCH) for Remaining System Information (RMSI), a Physical Downlink Shared Channel (PDSCH) for the RMSI, and other PDCCH and PDSCH associated with broadcast acquisition and random access. When the terminal device demodulates these channels, it is needed to perform channel estimation based on the Demodulation Reference Signal (DMRS) associated with these channels to obtain a better channel demodulation effect.

However, in the existing design of the DMRS sequence for channels, the resource utilization is low. This problem is particularly acute in scenarios where available resources are limited, such as in the scenario of unlicensed spectrum. Therefore, how to design DMRS to improve resource utilization is a question worth studying.

### SUMMARY

Embodiments of the present disclosure provide a wireless communication method, a sending node and a receiving node, which can improve resource utilization.

According to a first aspect, there is provided a wireless communication method, including:
sending, by a sending node, a first reference signal and a second reference signal in a first subband to a receiving node, wherein the first reference signal and the second reference signal share an antenna port, and the first reference signal and the second reference signal are used by the receiving node to perform channel estimation.

According to a second aspect, there is provided a wireless communication method, including:
receiving, by a receiving node, a first reference signal and a second reference signal sent from a sending node in a first subband, wherein the first reference signal and the second reference signal share an antenna port; and
performing, by the receiving node, channel estimation according to the first reference signal and the second reference signal.

According to a third aspect, there is provided a sending node configured to perform the method according to the first aspect or any implementation of the first aspect. Specifically, the sending node includes units configured to perform the method according to the first aspect or any implementation of the first aspect.

According to a fourth aspect, there is provided a receiving node configured to perform the method according to the second aspect or any implementation of the second aspect. Specifically, the receiving node includes units configured to perform the method according to the second aspect or any implementation of the second aspect.

According to a fifth aspect, there is provided a communication device, including a processor and a memory. The memory is configured to store a computer program, and the processor is configured to call and run the computer program stored in the memory to perform the method according to any one of the first to second aspects or any implementation of the first to second aspects.

According to a sixth aspect, there is provided a chip configured to implement the method according to any one of the first to second aspects or any implementation of the first to second aspects.

Specifically, the chip includes a processor configured to call and run a computer program stored in a memory to cause a device in which the chip is installed to perform the method according to any one of the first to second aspects or any implementation of the first to second aspects.

According to a seventh aspect, there is provided a computer-readable storage medium configured to store a computer program, wherein the computer program is configured to cause a computer to perform the method according to any one of the first to second aspects or any implementation of the first to second aspects.

According to an eighth aspect, there is provided a computer program product including computer program instructions that cause a computer to perform the method according to any one of the first to second aspects or any implementation of the first to second aspects.

According to a ninth aspect, there is provided a computer program. When the computer program is run on a computer, the computer is caused to perform the method according to any one of the first to second aspects or any implementation of the first to second aspects.

Based on the above technical solutions, in the wireless communication method according to embodiments of the present disclosure, the sending node can use the same antenna port to send at least two reference signals to the receiving node, so that the receiving node can assume that the at least two reference signals experience the same or similar channel(s), and then the receiving node can perform channel estimation based on the at least two reference signals. The technical solutions provided by embodiments of the present disclosure are beneficial to improve resource utilization and can also improve channel estimation performance.

### BRIEF DESCRIPTION OF THE DRAWINGS

FIG. 1 is a schematic diagram of communication system architecture according to an embodiment of the present disclosure.
FIG. 2 is a schematic flowchart of a wireless communication method according to an embodiment of the present disclosure.
FIG. 3 is a schematic flowchart of another wireless communication method according to an embodiment of the present disclosure.
FIG. 4 is a schematic diagram showing a transmission mode of a DMRS sequence.
FIG. 5 is a schematic diagram showing another transmission mode of a DMRS sequence.
FIG. 6 is a schematic block diagram of a sending node according to an embodiment of the present disclosure.
FIG. 7 is a schematic block diagram of a receiving node according to an embodiment of the present disclosure.
FIG. 8 is a schematic block diagram of a communication device according to an embodiment of the present disclosure.
FIG. 9 is a schematic block diagram of a chip according to an embodiment of the present disclosure.
FIG. 10 is a schematic block diagram of a communication system according to an embodiment of the present disclosure.

### DETAILED DESCRIPTION

Technical solutions in embodiments of the present disclosure will be described below with reference to drawings. The described embodiments are a part of the embodiments of the present disclosure, not all of the embodiments of the present disclosure. Based on the embodiments described herein, all other embodiments obtained by those of ordinary skill in the art without creative work shall fall within the protection scope of the present disclosure.

The technical solutions of embodiments of the present disclosure can be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system or a 5G system, etc.

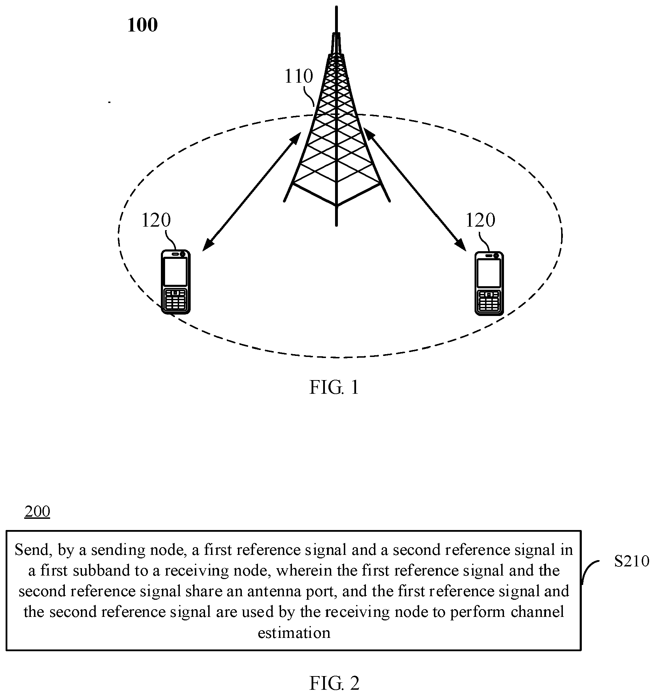

As an example, the communication system 100 applied in embodiments of the present disclosure may be as shown in FIG. 1. The communication system 100 includes a network device 110, and the network device 110 may be a device that communicates with a terminal device 120 (or called a communication terminal or a terminal). The network device 110 can provide communication coverage for a specific geographic area, and can communicate with terminal devices in the coverage area. According to embodiments, the network device 110 may be a base station (Base Transceiver Station, BTS) in a GSM system or a CDMA system, a base station (NodeB, NB) in a WCDMA system, an evolved base station (Evolutional Node B, eNB or eNodeB) in an LTE system, or a wireless controller in a Cloud Radio Access Network (CRAN), or the network device may be a mobile switching center, a relay station, an access point, an on-vehicle device, a wearable device, a hub, a switch, a network bridge, a router, a network side device in a 5G network, or a network device in a future evolved Public Land Mobile Network (PLMN), etc.

The communication system 100 also includes at least one terminal device 120 within the coverage area of the network device 110. The "terminal device" as used herein may be connected in the following manners (including but not limited to): the terminal device may be connected via wired lines, such as via Public Switched Telephone Networks (PSTN), Digital Subscriber Line (DSL), digital cables, and direct cable connections; and/or the terminal may be connected via another data connection/network; and/or the terminal device may be connected via a wireless interface, such as cellular networks, wireless local area network (WLAN), digital TV networks such as DVB-H networks, satellite networks, AM-FM A broadcast transmitter; and/or the terminal device is connected via a device of another terminal device which is configured to receive/send communication signals; and/or the terminal device is connected via an Internet of Things (IoT) device. A terminal device set as communicating through a wireless interface may be referred to as a "wireless communication terminal", a "wireless terminal" or a "mobile terminal". Examples of the mobile terminal include but are not limited to: satellite or cellular phone; Personal Communications System (PCS) terminal that can integrate a cellular radio phone with data processing, fax, and data communication capabilities; a PDA which can include a radio phone, a pager, an Internet/intranet access, a Web browser, a memo pad, a calendar, and/or Global Positioning System (GPS) receiver; and conventional laptop and/or palmtop receivers or other electronic device including a radio telephone transceiver. The terminal device can refer to access terminal, User Equipment (UE), user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, an in-vehicle device, a wearable devices, a terminal device in 5G networks, or a terminal device in the future evolved PLMN, etc.

According to embodiments, Device to Device (D2D) communication may be performed between the terminal devices 120.

According to embodiments, the 5G system or 5G network may also be referred to as a New Radio (NR) system or NR network.

FIG. 1 exemplarily shows one network device and two terminal devices. According to other embodiments, the communication system 100 may include multiple network devices and the coverage of each network device may include other numbers of terminal devices, and embodiments of the present disclosure do not impose specific limitations on this.

According to embodiments, the communication system 100 may also include other network entities such as a network controller and a mobility management entity, and embodiments of the present disclosure do not impose specific limitations on this.

It should be understood that the devices with communication functions in the network/system in embodiments of the present disclosure may be referred to as communication devices. Taking the communication system 100 shown in FIG. 1 as an example, the communication devices may include the network device 110 and the terminal devices 120 with communication functions, and the network device 110 and the terminal devices 120 may be the devices described above, which will not be repeated here. The communication devices may also include other devices in the communication system 100, such as other network entities such as a network controller or a mobility management entity, and embodiments of the present disclosure do not impose specific limitations on this.

It should be understood that the terms "system" and "network" are often used interchangeably herein. The term "and/or" herein describes an association relationship between associated objects, which means that there can be three relationships, for example, "A and/or B" can mean: A alone, B alone, and A and B together. In addition, the character "/" herein generally indicates that the associated objects before and after "/" are in an "or" relationship.

In the 5G system, the generation, time-frequency resource mapping and port mapping for DMRS sequences for PDCCH, PDSCH, and PBCH are relatively independent, resulting in low resource utilization. This problem is especially obvious in signal transmission in the unlicensed spectrum. In the unlicensed spectrum, it is needed to use channels to transmit signals based on Listen Before Talk (LBT); when a network device obtains the right to use a channel once, the need for the network device to use the transmission opportunity to send signals and channels which can be found by a terminal device to access a cell becomes particularly prominent. Therefore, how to perform channel estimation to improve resource utilization is an urgent problem to be solved.

In view of the above, embodiments of the present disclosure provide a wireless communication method, which is beneficial to improve resource utilization.

The following describes the wireless communication method of the embodiments of the present disclosure with reference to FIG. 2 to FIG. 5. It should be understood that FIG. 2 to FIG. 5 are schematic flowcharts of the wireless communication method of the embodiments of the present disclosure, showing the detailed communication steps or operations of the method. However, these steps or operations are only examples, and the embodiments of the present disclosure may also perform other operations or variations of the operations in FIG. 2 to FIG. 5.

FIG. 2 is a schematic flowchart of a wireless communication method according to an embodiment of the application. As shown in FIG. 2, the method 200 may include the following contents:

In S210, a sending node sends a first reference signal and a second reference signal in a first subband to a receiving node. The first reference signal and the second reference signal share an antenna port, and the first reference signal and the second reference signal are used by the receiving node to perform channel estimation.

In some embodiments of the present disclosure, the sending node may be a network device, and the receiving node may be a terminal device, and the first reference signal and the second reference signal may be downlink reference signals. Alternatively, the sending node may be a terminal device, and the receiving node may be a network device, and the first reference signal and the second reference signal may be uplink reference signals.

In some embodiments of the present disclosure, the sending node may use the same antenna port on the first subband to send at least two reference signals, for example, the first reference signal and the second reference signal. In this case, a channel which the second reference signal experiences and a channel which the first reference signal experiences can be considered the same or similar. In other words, the channel experienced by the second reference signal may be determined according to the channel experienced by the first reference signal.

Correspondingly, the receiving node may receive the first reference signal and the second reference signal on the first subband. Further, the receiving node may assume that the first reference signal and the second reference signal share an antenna port, and thus based on this assumption, the receiving node can estimate the channel quality of the first subband based on the received first reference signal and second reference signal. Therefore, in the wireless communication method of the embodiments of the present disclosure, the receiving node can perform the channel estimation based on at least two reference signals, and such method is beneficial to improve resource utilization and channel estimation performance.

It should be understood that in embodiments of the present disclosure, the sending node may use the same antenna port to send more reference signals, and the receiving node may perform joint channel estimation based on at least two of the more reference signals to improve resource utilization and channel estimation performance.

It should also be understood that, in embodiments of the present disclosure, the sending node may also use the same beam to send the at least two reference signals. In this case, it may be considered that the channels experienced by the at least two reference channels are the same or similar. Further, the receiving node may assume that the at least two reference signals experience the same channel, and perform channel estimation according to the at least two reference signals based on this assumption. The method is beneficial to improve resource utilization.

That is to say, in embodiments of the present disclosure, the first reference signal and the second reference signal can be considered to satisfy a Quasi-co-located (QCL) relationship, so it can be assumed that the first reference signal and the second reference signal experience a same or similar channel, and thereby channel estimation may be performed based on the first reference signal and the second reference signal.

According to some embodiments, if the sending node is a network device, the first reference signal may be one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access (i.e., the fourth message in a contention-based random access);
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

That is, the first reference signal can be a DMRS used to demodulate PDCCH, PDSCH or PBCH. The PDCCH can be used to schedule downlink information or a downlink message, for example, broadcast information, RAR, MSG4, or a paging message. The PDSCH can be used to carry downlink information or downlink message, for example, broadcast information, RAR, MSG4, or a paging message. Embodiments of the present disclosure do not impose specific limitations on this.

In embodiments of the present disclosure, the second reference signal may also be one of the above-mentioned signals. The first reference signal and the second reference signal may be the same or different, and embodiments of the present disclosure do not impose specific limitations on this.

In embodiments of the present disclosure, the broadcast information may include one or more of Remaining System Information (RMSI) and System Information Block (SIB).

It should be noted that, in embodiments of the present disclosure, the CORESET can be used to indicate a transmission resource of the PDCCH, that is, the sending node can send the PDCCH on the resource indicated by CORESET. According to some embodiments, the sending node may send the PDCCH on all resources indicated by the CORESET, or the sending node may send the PDCCH on a part of the resources indicated by the CORESET; the sending node may send the DMRS used for demodulating the PDCCH on each resource indicated by the CORESET; or, the sending node may send the DMRS sequence only on the resource for transmitting the PDCCH.

According to some embodiments, if the sending node is a terminal device, the first reference signal and the second reference signal may be DMRS used to demodulate a Physical Random Access Channel (PRACH), a Physical Uplink Control Channel (PUCCH) or a Physical Uplink Shared Channel (PUSCH). The PRACH can be used to carry a random access preamble (namely Msg1) or Msg3. The PUCCH can be used for scheduling uplink information or a uplink message such as Msg1 or Msg3. The PUSCH may be used to carry uplink information or uplink message such as a paging response message.

As an example and not limitation, if the first reference signal is the DMRS for the PBCH, the first reference signal and the second reference signal may share the antenna port 4000; or, if the first reference signal is the DMRS for the PDCCH, the first reference signal and the second reference signal may share the antenna port 2000. According to some other embodiments, the sending node may also use other antenna ports to send the first reference signal and the second reference signal, and embodiments of the present disclosure do not impose limitations on this.

In embodiments of the present disclosure, there is a fixed deviation between an Energy Per Resource Element (EPRE) of the first reference signal and an EPRE of the second reference signal.

It should be understood that the EPRE can be used to measure the transmit power, and there being a fixed deviation between the EPRE of the first reference signal and the EPRE of the second reference signal can refer to that the difference between the EPRE of the first reference signal and the EPRE of the second reference signal is a fixed value. In other words, there is a fixed power difference between the EPRE of the first reference signal and the EPRE of the second reference signal.

According to some embodiments, the fixed deviation may be M decibels (dB), where M is an integer.

In an exemplary embodiment, the M may be zero, that is, the power difference between the EPRE of the first reference signal and the EPRE of the second reference signal is 0 dB.

In embodiments of the present disclosure, the M may be specified in a protocol, and the value of M specified by the protocol may be preset on the sending node, that is, the sending node can learn about M without signaling interaction. Alternatively, the M may be configured by the sending node, for example, the sending node may use semi-static signaling (such as Radio Resource Control (RRC) signaling) or dynamic signaling (such as Downlink Control Information (DCI)) to configure the M. Alternatively, the M may be determined through negotiation between the sending node and the receiving node. Embodiments of the present disclosure do not impose specific limitations on this.

In some embodiments, a time unit occupied by the first reference signal in the time domain and a time unit occupied by the second reference signal in the time domain are partially or completely the same.

That is, the time domain resources occupied by the first reference signal and the second reference signal at least partially overlap.

In embodiments of the present disclosure, a time unit may be one or more subframes, or one or more slots, or may be defined as one or more mini-slots, etc., and embodiments of the present disclosure do not impose specific limitations on this.

In embodiments of the present disclosure, the subcarrier spacing of the first reference signal and the subcarrier spacing of the second reference signal are the same.

For example, the sub-carrier spacing of the first reference signal and the second reference signal may be 15 kHz, 30 kHz, or 60 kHz.

In some embodiments, the length of a cyclic prefix of the first reference signal and the length of a cyclic prefix of the second reference signal are the same.

For example, the cyclic prefixes of the first reference signal and the second reference signal are both Normal Cyclic Prefix (NCP), or may be other CPs, and embodiments of the present disclosure do not impose specific limitations on this.

In summary, in embodiments of the present disclosure, the sending node can control the first reference signal and the second reference signal to satisfy the following constraints: for example, the first reference signal and the second reference signal share an antenna port, there is a fixed deviation between EPREs of the first and second reference signals, the first and second reference signals occupy time domain resources which are completely or partially the same, the first and second reference signals use the same subcarrier spacing, or have the same CP length, and so on.

In this way, after the receiving node receives the first reference signal and the second reference signal, it can assume that the first reference signal and the second reference signal share an antenna port, there is a fixed deviation between the EPRE of the first reference signal and the EPRE of the second reference signal, the first reference signal and the second reference signal occupy the same time domain resources, use the same subcarrier spacing and have the same CP length. Based on the above assumptions, the receiving node performs channel estimation according to the first reference signal and the second reference signal, and this is beneficial to reduce the complexity of channel estimation.

In some exemplary embodiments, the first subband is an initial active bandwidth part on the unlicensed spectrum.

That is, the sending node can send the first reference signal and the second reference signal on the initial active bandwidth part (BWP) on the unlicensed spectrum, and accordingly, the receiving node can receive the first reference signal and the second reference signal on the initial active BWP on the unlicensed spectrum. Further, the receiving node may estimate the channel quality of the first subband according to the received first reference signal and the second reference signal based on the above assumptions. This is beneficial to improve resource utilization in scenarios where available resources are limited, such as in the scenario of unlicensed spectrum.

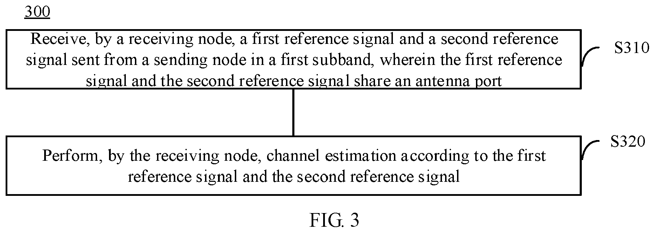

The wireless communication method according to embodiments of the present disclosure is described in detail above with reference to FIG 2 from the perspective of the sending node, and the wireless communication method according to some other embodiments of the present disclosure will be described in detail below with reference to FIG. 3 from the perspective of the receiving node. It should be understood that the description on the receiving node side and the description on the sending node side correspond to each other, and details can be found from the previous description. To avoid repetition, details are not repeated here.

FIG. 3 is a schematic flowchart of another wireless communication method according to an embodiment of the present disclosure. As shown in FIG. 3, the method may include the following contents:

In S310, a receiving node receives a first reference signal and a second reference signal sent from a sending node in a first subband. The first reference signal and the second reference signal share an antenna port.

In S320, the receiving node performs channel estimation according to the first reference signal and the second reference signal.

In some embodiments, performing, by the receiving node, the channel estimation according to the first reference signal and the second reference signal, includes:

performing, by the receiving node, the channel estimation according to the first reference signal and the second reference signal, based on an assumption that first reference signal and the second reference signal experience a same channel.

In some embodiments, the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, there is a fixed difference between an Energy Per Resource Element (EPRE) of the first reference signal and the EPRE of the second reference signal.

In some embodiments, the fixed difference is M decibels, wherein M is an integer.

In some embodiments, the M is preset on the sending node or configured by the sending node.

In some embodiments, a time unit occupied by the first reference signal in a time domain and a time unit occupied by the second reference signal in the time domain are partly or completely the same.

In some embodiments, a subcarrier spacing of the first reference signal and a subcarrier spacing of the second reference signal are the same.

In some embodiments, a length of a cyclic prefix of the first reference signal and a length of a cyclic prefix of the second reference signal are the same.

In some embodiments, the first subband is an initial active bandwidth part on an unlicensed spectrum.

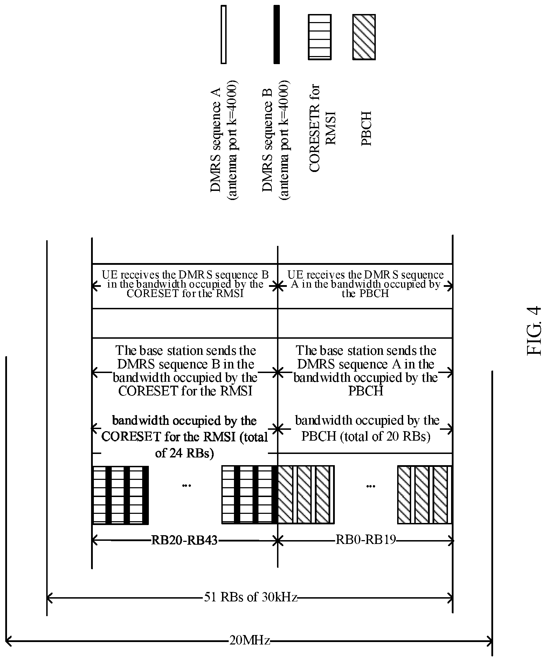

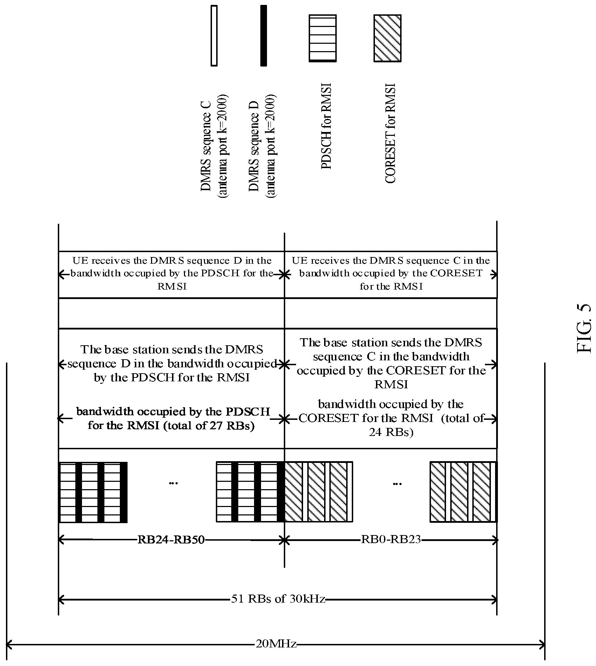

Hereinafter, the wireless communication method according to embodiments of the present disclosure will be described with reference to some examples shown in FIG. 4 and FIG. 5.

It should be understood that in the examples shown in FIG. 4 and FIG. 5, the sending node is a base station, the receiving node is a UE, the first subband is the initial active BWP and is 20MHz, the subcarrier spacing is 30kHz, and the transmission of the DMRS sequence is described below based these examples. However, embodiments of the present disclosure are not limited to these examples.

As shown in FIG. 4, the 20M bandwidth of the initial active BWP includes 51 Resource Blocks (RBs) of 30 kHz. The base station can send the PBCH on the initial active BWP. The PBCH can be located in the first twenty RBs (that is, RB0∼RB19) of the initial active BWP. The base station can select one or more Resource Elements (REs) from each of the first twenty RBs to send the DMRS sequence A for the PBCH. For example, the base station can select the first, the fifth, and the ninth REs in each of the twenty RBs (i.e., a total of sixty REs) to transmit the DMRS sequence A.

The base station can configure the CORESET of broadcast information (for example, RMSI) on the symbols where the PBCH is located. The RBs indicated by the CORESET can be used to transmit the PDCCH that schedules the RMSI. In some embodiments, the CORESET of the RMSI can be located on the 21st to 44th RBs on the initial active BWP. The base station selects one or more REs in each of the above twenty-four RBs to send the DMRS sequence B which is used to demodulate the PDCCH. For example, the base station may select the first, the fifth, and the ninth REs in each of the twenty-four RBs above (i.e., a total of seventy-two REs) to transmit the DMRS sequence B.

In some embodiments, the base station may determine the transmission position of the DMRS sequence according to the transmission position of the PDCCH. For example, if the PDCCH is only transmitted in the first three RBs of the 24 RBs, the base station may send the DMRS sequence B in the first three RBs, for example, the DMRS sequence B is sent only on the first, the fifth, and the ninth REs of each RB in the first three RBs. Alternatively, the base station can send the DMRS sequence B on all RBs as indicated by the CORESET. For example, the base station may send the DMRS sequence B on the first, the fifth, and the ninth REs of each of the twenty-four RBs.

Thus, in the example shown in FIG. 4, the first reference signal and the second reference signal are the DMRS sequence A and the DMRS sequence B, respectively, the DMRS sequence A is the DMRS for the PBCH, and the DMRS sequence B is the DMRS for the PDCCH which is used to schedule the RMSI. The subcarrier spacing of the DMRS sequence A and the subcarrier spacing of the DMRS sequence B are the same, and the DMRS sequence A and the DMRS sequence B occupy the same symbols.

Further, the base station can use the same antenna port to transmit the DMRS sequence A and the DMRS sequence B, for example, antenna port 4000 is used; the EPREs used by the base station to transmit the DMRS sequence A and the DMRS sequence B may differ by 0 dB; the base station transmits the DMRS sequence A and the DMRS sequence B use the same cyclic prefix, for example, both are NCP.

Correspondingly, the UE can select the first, the fifth, and the ninth REs in each of the first twenty RBs in the initial active BWP (i.e., a total of sixty REs). The UE assumes that the base station has transmitted the DMRS sequences A on these sixty REs. Also, the UE selects the first, the fifth, and the ninth REs in each of the 21st to 44th RBs in the initial active BWP (i.e., a total of seventy-two REs), and the UE assumes that the base station transmits the DMRS sequence B on these seventy-two REs.

Further, the UE may receive the DMRS sequence A and the DMRS sequence B on the above REs. After receiving the DMRS sequence A and the DMRS sequence B, the UE may assume that the DMRS sequence A and the DMRS sequence B use the same antenna port, the EPRE difference between the DMRS sequence A and the DMRS sequence B is 0 dB, and the cyclic prefixes used by the DMRS sequence A and the DMRS sequence B are both NCP. Accordingly, the UE can estimate the channel quality of the initial active BWP according to the received DMRS sequence A and the DMRS sequence B based on the above assumptions, so that resource utilization can be improved.

As shown in FIG. 5, the base station can configure the CORESET of the RMSI on the initial active BWP. The CORESET can be used to send the PDCCH which is used for scheduling the RMSI. The CORESET of the RMSI may be located on the 0th to 23rd RBs in the initial active BWP. The base station selects one or more REs in each of the twenty-four RBs to transmit the DMRS sequence C which is used to demodulate the PDCCH. For example, the base station may select the first, the fifth, and the ninth REs in each of the twenty RBs above, and a total of seventy-two REs are used for the transmission of the DMRS sequence C.

The base station sends the PDCCH on the symbol where the CORESET of the RMSI is located. The PDCCH can be used to indicate the position of the PDSCH carrying the RMSI. The PDSCH carrying the RMSI can be located on the 25th to 51st RBs in the initial active BWP. The base station selects one or more REs from each of the twenty-seven RBs to transmit the DMRS sequence D which is used to demodulate the PDSCH. For example, the base station may select the first, the fifth, and the ninth REs in each of the above twenty-seven RBs, and a total of eighty-one REs are used for the transmission of the DMRS sequence D.

Similar to the embodiment shown in FIG. 4, the transmission position of the DMRS sequence C may be the same as the transmission position of the PDCCH, or the DMRS sequence C may be transmitted on all RBs indicated by CORESET.

Therefore, in the example shown in FIG. 5, the first reference signal and the second reference signal are the DMRS sequence C and the DMRS sequence D, respectively, the DMRS sequence C is the DMRS for the PDCCH which is used for scheduling RMSI, and the DMRS sequence D is the DMRS for the PDSCH which carries the RMSI. The subcarrier spacing of the DMRS sequence C and the subcarrier spacing of the DMRS sequence D are the same, and the symbols occupied by the DMRS sequence C and the DMRS sequence D are the same.

Further, the base station may use the same antenna port for transmitting the DMRS sequence C and the DMRS sequence D, for example, antenna port 2000 is used; the EPREs used by the base station for transmitting the DMRS sequence C and the DMRS sequence D may differ by 0 dB; the base station sends the DMRS sequence C and the DMRS sequence D using the same cyclic prefix, for example, both are NCP.

Correspondingly, the UE can select the first, the fifth, and the ninth REs in each of the first 24 RBs in the initial active BWP (i.e., a total of seventy-two REs). The UE assumes that the base station has transmitted the DMRS sequence C on these seventy-two REs. Also, the UE selects the first, the fifth, and the ninth REs in each RB of the 25th to 51st RBs in the initial active BWP (i.e., a total of eighty-one REs). The UE assumes that the base station transmits the DMRS sequence D on all the eighty-one REs.

Further, the UE may receive the DMRS sequence C and the DMRS sequence D on the above RE. After receiving the DMRS sequence C and the DMRS sequence D, the UE may assume that the DMRS sequence C and the DMRS sequence D use the same antenna port, the EPRE difference between the DMRS sequence C and the DMRS sequence D is 0 dB, and the cyclic prefixes used by the DMRS sequence C and the DMRS sequence D are both NCP. Accordingly, the UE can estimate the channel quality of the initial active BWP according to the received DMRS sequence C and the DMRS sequence D based on the above assumptions. This can help to improve resource utilization.

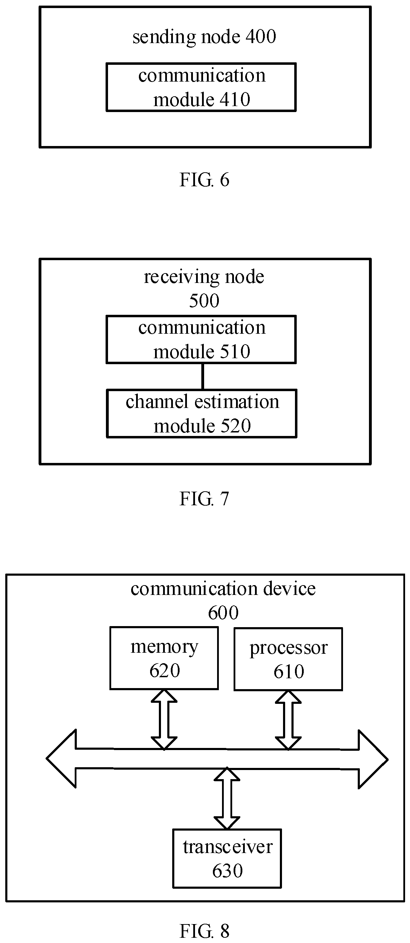

The method embodiments of the present disclosure are described in detail above with reference to FIGs. 2 to 5, and the device embodiments of the present disclosure will be described in detail below with reference to FIGs. 6 to 10. It should be understood that the device embodiments and the method embodiments correspond to each other and details of implementations can be found in previous description about the method embodiments.

FIG. 6 is a schematic block diagram of a sending node 400 according to an embodiment of the present disclosure. As shown in FIG. 6, the sending node 400 includes a communication module 410.

The communication module 410 is configured to send a first reference signal and a second reference signal in a first subband to a receiving node, wherein the first reference signal and the second reference signal share an antenna port, and the first reference signal and the second reference signal are used by the receiving node to perform channel estimation.

In some embodiments, the first reference signal and the second reference signal experience a same channel.

In some embodiments, the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, there is a fixed deviation between an Energy Per Resource Element (EPRE) of the first reference signal and the EPRE of the second reference signal.

In some embodiments, the fixed deviation is M decibels, wherein M is an integer.

In some embodiments, the M is preset on the sending node or configured by the sending node.

In some embodiments, a time unit occupied by the first reference signal in a time domain and a time unit occupied by the second reference signal in the time domain are partly or completely the same.

In some embodiments, a subcarrier spacing of the first reference signal and a subcarrier spacing of the second reference signal are the same.

In some embodiments, a length of a cyclic prefix of the first reference signal and a length of a cyclic prefix of the second reference signal are the same.

In some embodiments, the first subband is an initial active bandwidth part on an unlicensed spectrum.

FIG. 7 is a schematic block diagram of a receiving node 500 according to an embodiment of the present disclosure. As shown in FIG. 7, the receiving node 500 includes a communication module 510 and a channel estimation module 520.

The communication module 510 is configured to receive a first reference signal and a second reference signal sent from a sending node in a first subband, wherein the first reference signal and the second reference signal share an antenna port.

The channel estimation module 520 is configured to perform channel estimation according to the first reference signal and the second reference signal.

In some embodiments, the channel estimation module 520 is configured to:
perform the channel estimation according to the first reference signal and the second reference signal, based on an assumption that first reference signal and the second reference signal experience a same channel.

In some embodiments, the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

In some embodiments, there is a fixed deviation between an Energy Per Resource Element (EPRE) of the first reference signal and the EPRE of the second reference signal.

In some embodiments, the fixed deviation is M decibels, wherein M is an integer.

In some embodiments, the M is preset on the sending node or configured by the sending node.

In some embodiments, a time unit occupied by the first reference signal in a time domain and a time unit occupied by the second reference signal in the time domain are partly or completely the same.

In some embodiments, a subcarrier spacing of the first reference signal and a subcarrier spacing of the second reference signal are the same.

In some embodiments, a length of a cyclic prefix of the first reference signal and a length of a cyclic prefix of the second reference signal are the same.

In some embodiments, the first subband is an initial active bandwidth part on an unlicensed spectrum.

FIG. 8 is a schematic structural diagram of a communication device 600 according to an embodiment of the present disclosure. The communication device 600 shown in FIG. 8 includes a processor 610, and the processor 610 may call and run a computer program from a memory to perform the method in embodiments of the present disclosure.

According to embodiments, as shown in FIG. 8, the communication device 600 may further include a memory 620. The processor 610 may call and run a computer program from the memory 620 to perform the method in embodiments of the present disclosure.

The memory 620 may be a separate device independent of the processor 610, or may be integrated in the processor 610.

According to embodiments, as shown in FIG. 8, the communication device 600 may further include a transceiver 630, and the processor 610 may control the transceiver 630 to communicate with other devices. Specifically, the transceiver may send information or data to other devices, or receive information or data sent by other devices.

The transceiver 630 may include a transmitter and a receiver. The transceiver 630 may further include one or more antennas.

According to embodiments, the communication device 600 may specifically be the sending node according to an embodiment of the present disclosure, and the communication device 600 may implement the corresponding processes implemented by the sending node in the method embodiments of the present disclosure. For brevity, details are not repeated here.

According to embodiments, the communication device 600 may specifically be the receiving node in embodiments of the present disclosure, and the communication device 600 may implement the corresponding processes implemented by the receiving node in the method embodiments of the present disclosure. For brevity, details are not repeated here.

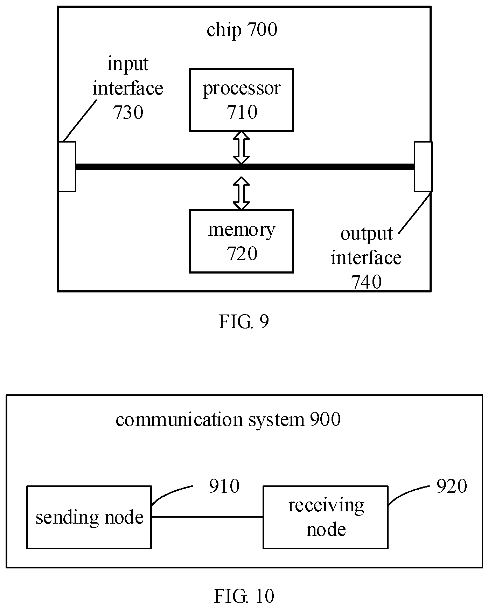

FIG. 9 is a schematic structural diagram of a chip according to an embodiment of the present disclosure. The chip 700 shown in FIG 9 includes a processor 710, and the processor 710 can call and run a computer program from a memory to implement the method according to embodiments of the present disclosure.

According to embodiments, as shown in FIG. 9, the chip 700 may further include a memory 720. The processor 710 may call and run a computer program from the memory 720 to implement the method according to embodiments of the present disclosure.

The memory 720 may be a separate device independent of the processor 710, or may be integrated in the processor 710.

According to embodiments, the chip 700 may further include an input interface 730. The processor 710 may control the input interface 730 to communicate with other devices or chips, and specifically, the processor 710 can control the input interface to obtain information or data sent by other devices or chips.

According to embodiments, the chip 700 may further include an output interface 740. The processor 710 can control the output interface 740 to communicate with other devices or chips, and specifically, the processor 710 can control the output interface 740 to output information or data to other devices or chips.

According to embodiments, the chip can be applied to the sending node in embodiments of the present disclosure, and the chip can implement the corresponding processes implemented by the sending node in various methods according to embodiments of the present disclosure. For brevity, details are not repeated herein again.

According to embodiments, the chip can be applied to the receiving node in embodiments of the present disclosure, and the chip can implement the corresponding processes implemented by the receiving node in various methods according to embodiments of the present disclosure. For brevity, details are not repeated herein again.

It should be understood that the chip in the embodiments of the present disclosure may also be referred to as a system-level chip, a system chip, a chip system, or a system-on-chip, etc.

FIG. 10 is a schematic block diagram of a communication system 900 according to an embodiment of the present disclosure. As shown in FIG. 10, the communication system 900 includes a sending node 910 and a receiving node 920.

The sending node 910 may be used to implement the corresponding functions implemented by the sending node in the foregoing methods, and the receiving node 920 may be used to implement the corresponding functions implemented by the receiving node in the foregoing methods. For brevity, details are not repeated herein again.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in the embodiments of the present disclosure can be implemented or executed. The general-purpose processor may be a microprocessor or the processor may also be any conventional processor or the like. The steps of the methods disclosed in the embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads the information in the memory to perform the steps of the above methods in combination with hardware.

It can be understood that the memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM)), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

An embodiment of the present disclosure also provides a computer-readable storage medium for storing computer programs.

According to embodiments, the computer-readable storage medium may be applied to the network device in embodiments of the present disclosure, and the computer programs cause a computer to perform the corresponding processes implemented by the network device in each method embodiment of the present disclosure. For brevity, repeated descriptions are omitted here.

According to embodiments, the computer-readable storage medium may be applied to the mobile terminal/terminal device in embodiments of the present disclosure, and the computer programs cause a computer to perform the corresponding processes implemented by the mobile terminal/terminal device in each method embodiment of the present disclosure. For brevity, repeated descriptions are omitted here.

An embodiment of the present disclosure provides a computer program product, including computer program instructions.

According to embodiments, the computer program product may be applied to the network device in embodiments of the present disclosure, and the computer program instructions cause a computer to perform the corresponding processes implemented by the network device in each method embodiment of the present disclosure. For brevity, repeated descriptions are omitted here.

According to embodiments, the computer program product may be applied to the mobile terminal/terminal device in embodiments of the present disclosure, and the computer program instructions cause a computer to perform the corresponding processes implemented by the mobile terminal/terminal device in each method embodiment of the present disclosure. For brevity, repeated descriptions are omitted here.

An embodiment of the present disclosure also provides a computer program.

According to embodiments, the computer program may be applied to the network device in embodiments of the present disclosure, and when the computer program runs on a computer, the computer is caused to perform the corresponding processes implemented by the network device in each method embodiment of the present disclosure. For brevity, repeated descriptions are omitted here.

According to embodiments, the computer program may be applied to the mobile terminal/terminal device in embodiments of the present disclosure, and when the computer program runs on a computer, the computer is caused to perform the corresponding processes implemented by the mobile terminal/terminal device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

## Claims

1. A wireless communication method, comprising:
sending, by a sending node, a first reference signal and a second reference signal in a first subband to a receiving node, wherein the first reference signal and the second reference signal share an antenna port, and the first reference signal and the second reference signal are used by the receiving node to perform channel estimation.

2. The method according to claim 1, wherein the first reference signal and the second reference signal experience a same channel.

3. The method according to claim 1 or 2, wherein the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

4. The method according to any one of claims 1 to 3, wherein the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

5. The method according to any one of claims 1 to 4, wherein there is a fixed deviation between an Energy Per Resource Element (EPRE) of the first reference signal and the EPRE of the second reference signal.

6. The method according to claim 5, wherein the fixed deviation is M decibels, wherein M is an integer.

7. The method according to claim 6, wherein the M is preset on the sending node or configured by the sending node.

8. The method according to any one of claims 1 to 7, wherein a time unit occupied by the first reference signal in a time domain and a time unit occupied by the second reference signal in the time domain are partly or completely the same.

9. The method according to any one of claims 1 to 8, wherein a subcarrier spacing of the first reference signal and a subcarrier spacing of the second reference signal are the same.

10. The method according to any one of claims 1 to 9, wherein a length of a cyclic prefix of the first reference signal and a length of a cyclic prefix of the second reference signal are the same.

11. The method according to any one of claims 1 to 10, wherein the first subband is an initial active bandwidth part on an unlicensed spectrum.

12. A wireless communication method, comprising:
receiving, by a receiving node, a first reference signal and a second reference signal sent from a sending node in a first subband, wherein the first reference signal and the second reference signal share an antenna port; and
performing, by the receiving node, channel estimation according to the first reference signal and the second reference signal.

13. The method according to claim 12, wherein performing, by the receiving node, the channel estimation according to the first reference signal and the second reference signal, comprises:
performing, by the receiving node, the channel estimation according to the first reference signal and the second reference signal, based on an assumption that first reference signal and the second reference signal experience a same channel.

14. The method according to claim 12 or 13, wherein the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

15. The method according to any one of claims 12 to 14, wherein the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

16. The method according to any one of claims 12 to 15, wherein there is a fixed deviation between an Energy Per Resource Element (EPRE) of the first reference signal and the EPRE of the second reference signal.

17. The method according to claim 16, wherein the fixed deviation is M decibels, wherein M is an integer.

18. The method according to claim 17, wherein the M is preset on the sending node or configured by the sending node.

19. The method according to any one of claims 12 to 18, wherein a time unit occupied by the first reference signal in a time domain and a time unit occupied by the second reference signal in the time domain are partly or completely the same.

20. The method according to any one of claims 12 to 19, wherein a subcarrier spacing of the first reference signal and a subcarrier spacing of the second reference signal are the same.

21. The method according to any one of claims 12 to 20, wherein a length of a cyclic prefix of the first reference signal and a length of a cyclic prefix of the second reference signal are the same.

22. The method according to any one of claims 12 to 21, wherein the first subband is an initial active bandwidth part on an unlicensed spectrum.

23. A sending node, comprising:
a communication module configured to send a first reference signal and a second reference signal in a first subband to a receiving node, wherein the first reference signal and the second reference signal share an antenna port, and the first reference signal and the second reference signal are used by the receiving node to perform channel estimation.

24. The sending node according to claim 23, wherein the first reference signal and the second reference signal experience a same channel.

25. The sending node according to claim 23 or 24, wherein the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

26. The sending node according to any one of claims 23 to 25, wherein the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

27. The sending node according to any one of claims 23 to 26, wherein there is a fixed deviation between an Energy Per Resource Element (EPRE) of the first reference signal and the EPRE of the second reference signal.

28. The sending node according to claim 27, wherein the fixed deviation is M decibels, wherein M is an integer.

29. The sending node according to claim 28, wherein the M is preset on the sending node or configured by the sending node.

30. The sending node according to any one of claims 23 to 29, wherein a time unit occupied by the first reference signal in a time domain and a time unit occupied by the second reference signal in the time domain are partly or completely the same.

31. The sending node according to any one of claims 23 to 30, wherein a subcarrier spacing of the first reference signal and a subcarrier spacing of the second reference signal are the same.

32. The sending node according to any one of claims 23 to 31, wherein a length of a cyclic prefix of the first reference signal and a length of a cyclic prefix of the second reference signal are the same.

33. The sending node according to any one of claims 23 to 32, wherein the first subband is an initial active bandwidth part on an unlicensed spectrum.

34. A receiving node, comprising:
a communication module configured to receive a first reference signal and a second reference signal sent from a sending node in a first subband, wherein the first reference signal and the second reference signal share an antenna port; and
a channel estimation module configured to perform channel estimation according to the first reference signal and the second reference signal.

35. The receiving node according to claim 34, wherein the channel estimation module is configured to:
perform the channel estimation according to the first reference signal and the second reference signal, based on an assumption that first reference signal and the second reference signal experience a same channel.

36. The receiving node according to claim 34 or 35, wherein the first reference signal is one of the following:
Demodulation Reference Signal (DMRS) for Physical Broadcast Channel (PBCH);
DMRS for Physical Downlink Control Channel (PDCCH) for scheduling broadcast information;
DMRS which is transmitted on a Control Resource Set (CORESET) where a PDCCH for scheduling broadcast information is located and is used for demodulating the PDCCH;
DMRS for a Physical Downlink Shared Channel (PDSCH) carrying broadcast information;
DMRS for a PDCCH for scheduling a Random Access Response (RAR) message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a message four (MSG4) for random access;
DMRS which is transmitted on a CORESET where a PDCCH for scheduling a MSG4 for random access is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

37. The receiving node according to any one of claims 34 to 36, wherein the second reference signal is one of the following:
DMRS for a PBCH;
DMRS for a PDCCH for scheduling broadcast information;
DMRS which is transmitted on a CORESET where a PDCCH for scheduling broadcast information is located and is used for demodulating the PDCCH;
DMRS for a PDSCH carrying broadcast information;
DMRS for a PDCCH for scheduling a RAR message;
DMRS which is transmitted on a CORESET where a PDCCH for scheduling a RAR is located and is used for demodulating the PDCCH;
DMRS for a PDSCH carrying a RAR;
DMRS for a PDCCH for scheduling a MSG4;
DMRS which is transmitted on a CORESET where a PDCCH for scheduling a MSG4 is located and is used for demodulating the PDCCH;
DMRS for a PDSCH carrying a MSG4;
DMRS for a PDCCH for scheduling a paging message;
DMRS which is transmitted on a CORESET where a PDCCH for scheduling a paging message is located and is used for demodulating the PDCCH; or
DMRS for a PDSCH carrying a paging message.

38. The receiving node according to any one of claims 34 to 37, wherein there is a fixed deviation between an Energy Per Resource Element (EPRE) of the first reference signal and the EPRE of the second reference signal.

39. The receiving node according to claim 38, wherein the fixed deviation is M decibels, wherein M is an integer.

40. The receiving node according to claim 39, wherein the M is preset on the sending node or configured by the sending node.

41. The receiving node according to any one of claims 34 to 40, wherein a time unit occupied by the first reference signal in a time domain and a time unit occupied by the second reference signal in the time domain are partly or completely the same.

42. The receiving node according to any one of claims 34 to 41, wherein a subcarrier spacing of the first reference signal and a subcarrier spacing of the second reference signal are the same.

43. The receiving node according to any one of claims 34 to 42, wherein a length of a cyclic prefix of the first reference signal and a length of a cyclic prefix of the second reference signal are the same.

44. The receiving node according to any one of claims 34 to 43, wherein the first subband is an initial active bandwidth part on an unlicensed spectrum.

45. A sending node, comprising: a processor and a memory, wherein the memory is configured to store a computer program, and the processor is configured to call and run the computer program stored in the memory to perform the method according to any one of claims 1 to 11.

46. A chip, comprising: a processor configured to call and run a computer program stored in a memory to cause a device in which the chip is installed to perform the method according to any one of claims 1 to 11.

47. A computer-readable storage medium configured to store a computer program, wherein the computer program is configured to cause a computer to perform the method according to any one of claims 1 to 11.

48. A computer program product comprising computer program instructions that cause a computer to perform the method according to any one of claims 1 to 11.

49. A computer program configured to cause a computer to perform the method according to any one of claims 1 to 11.

50. A receiving node, comprising: a processor and a memory, wherein the memory is configured to store a computer program, and the processor is configured to call and run the computer program stored in the memory to perform the method according to any one of claims 12 to 22.

51. A chip, comprising: a processor configured to call and run a computer program stored in a memory to cause a device in which the chip is installed to perform the method according to any one of claims 12 to 22.

52. A computer-readable storage medium configured to store a computer program, wherein the computer program is configured to cause a computer to perform the method according to any one of claims 12 to 22.

53. A computer program product comprising computer program instructions that cause a computer to perform the method according to any one of claims 12 to 22.

54. A computer program configured to cause a computer to perform the method according to any one of claims 12 to 22.

55. A communication system, comprising:
the sending node according to any one of claims 23 to 33; and
the receiving node according to any one of claims 34 to 44.
